Europäisches Patentamt

European Patent Office

Office européen des brevets

(19)

(11) Numéro de publication : **0 199 617**
**B1**

(12) **FASCICULE DE BREVET EUROPÉEN**

(45) Date de publication du fascicule du brevet :
**13.12.89**

(21) Numéro de dépôt : **86400600.2**

(22) Date de dépôt : **21.03.86**

(51) Int. Cl.⁴ : **C 01 D   3/08**

(54) **Procédé de traitement de minerai carnallitique.**

(30) Priorité : **28.03.85 FR 8504629**

(43) Date de publication de la demande :
**29.10.86 Bulletin 86/44**

(45) Mention de la délivrance du brevet :
**13.12.89 Bulletin 89/50**

(84) Etats contractants désignés :
**FR NL**

(56) Documents cités :
**FR--A— 2 501 181**

(73) Titulaire : **MINES DE POTASSE D'ALSACE S.A.**
**11 Avenue d'Altkirch**
**F-68055 Mulhouse Cédex (FR)**

(72) Inventeur : **Bichara, Michel**
**8 Avenue Clémenceau**
**F-68000 Mulhouse (FR)**
Inventeur : **Koensgen, Jean-Pierre**
**20 rue des Seigneurs**
**F-68460 Lutterbach (FR)**
Inventeur : **Zimmerman, Jean-Pierre**
**35 Rue Galilée**
**F-68000 Mulhouse (FR)**

(74) Mandataire : **Rieux, Michel**
**NORSOLOR Service Propriété Industrielle Tour**
**Aurore 18, Place des Reflets Cedex no. 5**
**F-92080 Paris la Défense 2 (FR)**

EP 0 199 617 B1

Jouve, 18, rue St-Denis, 75001 Paris, France

**Description**

La présente invention concerne un procédé de traitement de minerai carnallitique pour récupérer le chlorure de potassium qui y est contenu.

La carnallite, qui est un sel de composition KCl, MgCl$_2$, 6H$_2$O, peut constituer le minerai principal d'un gisement ou bien être associée à d'autres minerais chlorurés ou sulfatés, mais elle se trouve toujours associée à une certaine quantité de chlorure de sodium. La carnallite peut aussi cristalliser lors de la concentration de saumures naturelles.

Pour traiter la carnallite en vue d'en récupérer le chlorure de potassium, on la met en contact avec de l'eau ou une solution saline qui dissout le chlorure de magnésium. La solution, dite de décomposition, peut avoir une composition initiale variable en MgCl$_2$, KCl et NaCl. On ajuste les quantités de façon à obtenir, après solubilisation totale du MgCl$_2$ contenu dans le minerai, une solution d'extraction qui soit saturée en KCl et NaCl et saturée ou proche de la saturation en MgCl$_2$. Au cours de la décomposition de l'édifice cristallin, on précipite du chlorure de potassium et de sodium et l'on recueille ainsi, sous forme solide, un mélange de chlorure de sodium et de chlorure de potassium appelé « sylvinite artificielle » que l'on traite de façon connue par flottation ou dissolution, pour obtenir du chlorure de potassium ayant une teneur commerciale en KCl.

La carnallite sous forme de gisement carnallitique est traitée selon des procédés connus adaptés au minerai qui est, par exemple, remonté à la surface et décomposé au contact d'une eau-mère pour donner de la sylvinite articicielle.

On a également proposé dans le brevet US-A-3.355.912 de dissoudre la carnallite au fond de la mine par injection dans le gisement d'une eau-mère ayant une composition telle que la carnallite soit dissoute sans décomposition de l'édifice cristallin. La solution obtenue est ensuite pompée au jour puis concentrée par évaporation pour recristalliser la carnallite qui est ensuite traitée comme décrit précédemment de façon à obtenir une sylvinite artificielle. Le procédé impose un rapport massique saumure de dissolution sur carnallite élevé, ce qui entraîne une importante consommation d'énergie pour évaporer la saumure et recristalliser la carnallite.

Un autre procédé décrit dans le brevet US-A-3.442.553 consiste à effectuer la décomposition de la carnallite au fond de la cavité et extraire directement de la cavité formée la sylvinite artificielle sous forme de pulpe par transport hydraulique. Il se produit dans ce procédé un dépôt de sylvinite sur les parois, ce qui implique que son utilisation soit limitée à des gisements de puissance assez forte pour que l'angle de la paroi avec la verticale soit suffisamment faible pour que la sylvinite tombe au fond de la cavité pour être repulpée. Cette technique n'est utilisée pratiquement que pour récupérer le chlorure de magnésium et le chlorure de potassium qui sont dissous dans la saumure de décomposition de la carnallite. Le chlorure de potassium que l'on peut récupérer ainsi ne représente que 15 à 20 % de la quantité totale contenue dans le minerai traité.

Dans le brevet FR-A-2.501.181 la demanderesse a décrit un procédé de traitement de minerai carnallitique dans lequel on met en contact ledit minerai avec une eau-mère de décomposition ayant une teneur appropriée en MgCl$_2$, KCl et NaCl pour qu'il y ait précipitation de sylvinite artificielle au sein d'une solution de chlorure de magnésium saturée en KCl et NaCl. Ce procédé est caractérisé par le fait que l'on ajoute à la saumure de décomposition un collecteur de flottation du chlorure de potassium et un additif susceptible de provoquer un dégagement gazeux dans la saumure. Ledit additif est, par exemple, le peroxyde d'hydrogène sous forme d'eau oxygénée. On extrait ainsi de la cavité un concentré enrichi en KCl avec un bon rendement.

Le procédé de la présente invention consiste à introduire dans la cavité contenant le minerai carnallitique une solution de décomposition sous saturée en KCl dans des proportions telles qu'elle dissout partiellement ou totalement le KCl provenant de la décomposition de la carnallite. La saumure à nouveau saturée en KCl est remontée au jour où elle est refroidie, ce qui provoque une précipitation de KCl dissous. Elle est ensuite réchauffée à la température de la cavité, ce qui a pour effet de la désaturer en KCl avant réinjection.

La présente invention fournit donc un procédé de traitement de minerai carnallitique dans lequel on met en contact ledit minerai avec une solution de décomposition, ayant une teneur appropriée en MgCl$_2$, KCl et NaCl pour qu'il y ait formation d'une solution d'extraction saturée en NaCl et KCl et précipitation de sylvinite artificielle, caractérisé par le fait que, après séparation de ladite sylvinite de la solution d'extraction, au moins une partie de cette dernière est appauvrie en KCl par refroidissement et la solution résultante réchauffée, qui se trouve alors soussaturée en KCl, est ajoutée au solvant utilisé pour former ladite solution de décomposition et/ou à une partie résiduelle de ladite solution d'extraction non appauvrie en KCl en proportions telles que l'on reconstitue ladite solution de décomposition de la carnallite, et que l'on utilise ladite solution reconstituée pour poursuivre le traitement.

Le solvant de la carnallite est avantageusement l'eau.

Le procédé de l'invention peut être utilisé conjointement au procédé de FR-A-2.501.181 et il permet ainsi de récupérer par flottation le sel qui se dépose au cours du refroidissement au même temps que le sel récupéré par flottation dans la cavité. On obtient ainsi une amélioration du niveau de la cinétique de dissolution.

En incorporant à la solution de décomposition, telle que définite ci-dessus, un additif, tel le peroxyde d'hydrogène, qui est susceptible de provoquer un dégagement gazeux dans la saumure et au niveau des parois de la cavité, on nettoie celle-ci en dégageant et dissolvant le KCl qui se forme lors de la décomposition de la carnallite, ce qui permet d'accroître la vitesse de dissolution ; de plus on accède au KCl déposé dans les anfractuosités qui peuvent se trouver dans le minerai ou se créent lors de sa décomposition, ce qui permet d'améliorer le rendement de récupération du KCl.

La quantité d'additif utilisée pour provoquer le dégagement gazeux varie selon l'additif. Elle est d'environ 10 à 50 kg par tonne de KCl théoriquement récupérable (soit 2 à 10 kg par tonne de carnallite traitée) dans le cas du peroxyde d'hydrogène.

Le rapport quantitatif, dans la solution de décomposition injectée, entre la fraction de la solution d'extraction appauvrie en KCl d'une part, et le solvant utilisé pour former la solution de décomposition et/ou la partie résiduelle de la solution d'extraction non appauvrie en KCl d'autre part, est variable ; il dépend de l'écart de température que l'on veut maintenir entre la solution de décomposition injectée au jour et la solution d'extraction au fond, de la concentration en $MgCl_2$ de la solution d'extraction et, dans le mode de réalisation où l'on opère selon FR-A-2.501.181, du rapport choisi entre KCl dissous et KCl flotté.

Dans la pratique, on cherche à maintenir une teneur en $MgCl_2$ de la solution d'extraction voisine de la saturation mais suffisamment loin pour ne pas précipiter de carnallite au cours du refroidissement (cette carnallite est toutefois assez pure et sa présence ne gêne pas la purification ultérieure). Pour cette même raison on préfère opérer avec un écart de température modéré, ce qui conduit à préférer une concentration en $MgCl_2$ comprise entre 30 et 37 g de $MgCl_2$ pour 100 g de $H_2O$, bien que l'on puisse utiliser des concentrations en dehors de cet intervalle. De même on préfère un écart de température compris entre 10 ºC et 30 ºC entre la solution de décomposition injectée et la solution d'extraction. Dans les conditions opératoires décrites ci-dessus, le rapport volumique dans la solution de décomposition injectée, entre la fraction de la solution d'extraction appauvrie en KCl d'une part, et le solvant utilisé pour former la solution de décomposition et/ou la partie résiduelle de la solution d'extraction non appauvrie en KCl d'autre part, peut varier entre 5 et 50 pour un écart de température de 10 ºC, le rapport préféré étant compris entre 10 et 30 pour cet écart de température.

Les exemples suivants illustrent l'invention sans la limiter.

## Exemples

Les essais ont été réalisés sur des blocs cylindriques de 20 cm de diamètre et 20 cm de hauteur, obtenus en comprimant un minerai broyé sous pression jusqu'à obtention d'une densité voisine de 1,60.

## Exemples 1 et 2

Deux essais de dissolution ont été menés en parallèle ; on a injecté dans chaque bloc 840 cm³/h d'une solution de recirculation appauvrie en KCl et 20 cm³/h d'eau. Dans le premier bloc (exemple 1) on a introduit également du peroxyde d'hydrogène à raison de 30 kg de $H_2O_2$ à 100 % par tonne de KCl récupérable. On avait les données suivantes.

| | Exemple 1 (Bloc 1 avec $H_2O_2$) | | Exemple 2 (Bloc 2 sans $H_2O_2$) | |
|---|---|---|---|---|
| Composition de la solution de décomposition injectée (refroidie à 17-18 °C) en g pour 100 g d'eau | $MgCl_2$ | 34,0 | $MgCl_2$ | 32,6 |
| | KCl | 4,7 | KCl | 5,1 |
| | NaCl | 3,8 | NaCl | 4,2 |

Cette solution est réchauffée à 27-28 ºC avant injection dans le bloc.

| | Exemple 1 | | Exemple 2 | |
|---|---|---|---|---|
| Composition de la solution d'extraction (température moyenne 27-28 °C) en g pour 100 g d'eau | $MgCl_2$ | 34,0 | $MgCl_2$ | 32,5 |
| | KCl | 5,5 | KCl | 5,6 |
| | NaCl | 3,9 | NaCl | 4,1 |
| KCl cristallisé en g pour 100 g d'eau | | 0,8 | | 0,5 |
| KCl dans le minerai décomposé en g | | 1 101 | | 956 |
| KCl cristallisé récupéré en g | | 882 | | 502 |
| Rendement récupération du KCl | | 80,1 % | | 52,5 % |
| Teneur en KCl du sel cristallisé | | 75 % | | 89 % |
| Teneur en NaCl du sel cristallisé | | 10 % | | 1,7 % |
| Teneur KCl du sel déposé dans la cavité | | 40,9 % | | 58 % |
| Teneur NaCl du sel déposé dans la cavité | | 53,4 % | | 31,8 % |

La comparaison des exemples 1 et 2 montre l'apport du peroxyde d'hydrogène pour favoriser la cinétique de dissolution. En effet, l'examen de la composition de la solution d'extraction montre que la solution extraite du bloc 1 (exemple 1) est plus saturée en KCl que celle du bloc 2 (exemple 2), compte tenu de la teneur relative en $MgCl_2$ de ces solutions. Cela se traduit par un rendement de récupération de 80,1 % KCl dans le bloc 1 et de 52,5 % dans le bloc 2.

On notera également la sélectivité relative de la dissolution reflétée par la teneur relative en KCl du sel cristallisé comparée à cette teneur dans le sel déposé dans la cavité.

### Exemples 3 et 4

Dans ces exemples nous indiquons les résultats obtenus en associant le procédé selon l'invention au procédé de flottation selon Fr-A-2.501.181, comparé à une dissolution seule.

Deux essais ont été menés en parallèle sur des blocs semblables.

Dans l'exemple 3 (bloc N° 3) conjuguant flottation et dissolution, le rapport volumique fraction de la solution d'extraction appauvrie en KCl/solvant utilisé pour former la solution de décomposition et/ou partie résiduelle de la solution d'extraction non appauvrie en KCl, au sein de la solution de décomposition est de 10,5/l.

Dans l'exemple 4 (bloc N° 4) avec dissolution seule, ce rapport est de 45,5/l.

Le gradient thermique moyen est de 10 °C dans les deux exemples.

On a obtenu les résultats suivants.

|  | Exemple 3 (bloc n° 3) | Exemple 4 (bloc n° 4) |
|---|---|---|
| **Conditions opératoires** | | |
| Collecteur de flottation : | 2 kg/t KCl récupérable | — |
| Eau oxygénée 100 % | 25 kg/t KCl récupérable | 25 kg/t KCl récupérable |
| Fraction de la solution d'extraction appauvrie en KCl | 200 cm³/h | 840 cm³/h |
| Eau utilisée pour former la solution de décomposition et/ou partie résiduelle de la solution d'extraction non appauvrie en KCl | 19,0 cm³/h | 18,5 cm³/h |
| Composition de la solution de décomposition injectée en g pour 100 g d'eau | $MgCl_2$ 34,0 / KCl 5,5 / NaCl 3,85 | $MgCl_2$ 34,7 / KCl 5,3 / NaCl 3,65 |
| Composition de la solution d'extraction en g pour 100 g d'eau Température moyenne : 27 °C | $MgCl_2$ 33,9 / KCl 5,5 / NaCl 3,8 | $MgCl_2$ 34,7 / KCl 5,3 / NaCl 3,65 |
| KCl cristallisé par 100 g $H_2O$ | 0,6 | 0,6 |
| KCl total dans le minerai décomposé en g | 1 004 | 939 |
| KCl récupéré par flottation en g | 293 | — |
| KCl récupéré par cristallisation en g | 480 | 770 |
| KCl total récupéré en g | 773 | |
| Rendement de récupération du KCl | 77,0 % | 82,0 % |
| Teneur en KCl du sel flotté | 80,1 % | — |
| Teneur en KCl du sel cristallisé | 74,5 % | 71,7 % |
| Teneur en NaCl du sel flotté | 6,7 % | — |
| Teneur en NaCl du sel cristallisé | 12,9 % | 15,4 % |
| Teneur en KCl du sel déposé dans la cavité | 30,9 % | 42,8 % |
| Teneur en NaCl du sel déposé dans la cavité | 62,6 % | 48,9 % |

Le rendement de récupération du KCl est très élevé (entre 77 et 82 %) dans ces deux exemples. Le rendement théorique, compte tenu du KCl contenu dans la solution de rejet, se situe entre 84 et 85 %.

Ces exemples montrent que l'utilisation, pour la décomposition de la carnallite, d'une solution de recirculation sous-saturée en KCl associée à un additif qui dégage un gaz, tel le peroxyde d'hydrogène, permet d'accroître la vitesse de décomposition du minerai tout en assurant un rendement de récupération élevé en KCl.

On voit également que le procédé de l'invention, utilisé conjointement au procédé de FR-A-2.501.181, permet d'accroître la vitesse de décomposition de la carnallite et ainsi d'augmenter la production unitaire en KCl.

## EP 0 199 617 B1

### Revendications

1. Procédé de traitement de minerai carnallitique dans lequel on met en contact ledit minerai avec une solution de décomposition, ayant une teneur appropriée en MgCl₂, KCl et NaCl pour qu'il y ait formation d'une solution d'extraction saturée en NaCl et KCl et précipitation de sylvinite artificielle, caractérisé par le fait que, après séparation de ladite sylvinite de la solution d'extraction, au moins une partie de cette dernière est appauvrie en KCl par refroidissement et la solution résultante réchauffée, qui se trouve alors soussaturée en KCl, est ajoutée au solvant utilisé pour former ladite solution de décomposition et/ou à une partie résiduelle de ladite solution d'extraction non appauvrie en KCl en proportions telles que l'on reconstitue ladite solution de décomposition de la carnallite, et que l'on utilise ladite solution reconstituée pour poursuivre le traitement.

2. Procédé selon la revendication 1, caractérisé en ce que le solvant de la carnallite est l'eau.

3. Procédé selon l'une des revendications 1 et 2, caractérisé en ce que la solution de décomposition contient en outre un additif susceptible de provoquer un dégagement gazeux dans la saumure.

4. Procédé selon la revendication 3, caractérisé en ce que ledit additif est le peroxyde d'hydrogène.

5. Procédé selon la revendication 4, caractérisé en ce que la quantité de peroxyde d'hydrogène est comprise entre 10 et 50 kg par tonne de KCl théoriquement récupérable.

6. Procédé selon l'une des revendications 1 à 5, caractérisé en ce que le rapport volumique entre la quantité de ladite solution résultante réchauffée et la quantité de solvant ou ladite partie résiduelle (de solution d'extraction non appauvrie) est compris entre 5 et 50.

7. Procédé selon l'une des revendications 1 à 6, caractérisé en ce que la solution de décomposition contient en outre un collecteur de flottation de chlorure de potassium.

### Claims

1. Process for the treatment of a carnallitic ore in which the said ore is brought into contact with a decomposition solution containing an appropriate concentration of MgCl₂, KCl and NaCl so as to form an extraction solution saturated with NaCl and KCl and to precipitate artificial sylvinite, characterized in that, after separation of the said sylvinite from the extraction solution, at least a part of the latter is depleted in KCl by cooling and the reheated resulting solution, which is then undersaturated with KCl, is added to the solvent employed to form the said decomposition solution and/or to a residual part of the said extraction solution which is not depleted in KCl in such proportions that the said carnallite decomposition solution is reconstituted and that the said reconstituted solution is employed to continue the treatment.

2. Process according to Claim 1, characterized in that the solvent for carnallite is water.

3. Process according to either of Claims 1 and 2, characterized in that the decomposition solution additionally contains an additive capable of producing a gas release in brine.

4. Process according to Claim 3, characterized in that the said additive is hydrogen peroxide.

5. Process according to Claim 4, characterized in that the quantity of hydrogen peroxide is between 10 and 50 kg per tonne of theoretically recoverable KCl.

6. Process according to one of Claims 1 to 5, characterized in that the volume relationship between the quantity of the said reheated resulting solution and the quantity of solvent or the said residual part (of undepleted extraction solution) is between 5 and 50.

7. Process according to one of Claims 1 to 6, characterized in that the decomposition solution additionally contains a potassium chloride flotation collector.

### Patentansprüche

1. Verfahren zur Aufbereitung von carnallitischem Erz, bei welchem man das genannte Erz mit einer Aufschlußlösung in Kontakt bringt, die einen solchen Gehalt an MgCl₂, KCl und NaCl besitzt, daß es zur Bildung einer an NaCl und KCl gesättigten Extraktionslösung und zur Ausfällung von künstlichem Sylvinit kommt, dadurch gekennzeichnet, daß nach Abtrennung des genannten Sylvinits von der Extraktionslösung mindestens ein Teil letzterer durch Abkühlen an KCl verarmen gelassen wird und die resultierende, nun an KCl untersättigte Lösung wiedererwärmt und dem zur Bildung der Aufschlußlösung verwendeten Lösungsmittel und/oder einem restlichen Teil der genannten, nicht an KCl verarmten Lösung in solchen Verhältnissen zugegeben wird, daß die genannte Carnallitaufschlußlösung wiederhergestellt wird, und daß man diese wiederhergestellte Lösung zur Fortführung der Aufbereitung verwendet.

2. Verfahren nach Anspruch 1, dadurch gekennzeichnet, daß das Lösungsmittel für den Carnallit Wasser ist.

3. Verfahren nach Anspruch 1 oder 2, dadurch gekennzeichnet, daß die Aufschlußlösung weiters einen Zusatzstoff enthält, der eine Gasentwicklung in der Salzlösung hervorrufen kann.

4. Verfahren nach Anspruch 3, dadurch gekennzeichnet, daß der Zusatzstoff Wasserstoffperoxid ist.

5. Verfahren nach Anspruch 4, dadurch gekennzeichnet, daß die Menge an Wasserstoffperoxid zwischen 10 und 50 kg pro Tonne theoretisch rückgewinnbaren KCl's beträgt.

6. Verfahren nach einem der Ansprüche 1 bis 5, dadurch gekennzeichnet, daß das Raumverhältnis

5

zwischen der Menge der genannten resultierenden, wiederwärmten Lösung und die Menge des Lösungsmittels oder dem genannten restlichen Teil (der nicht verarmten Extraktionslösung) zwischen 5 und 50 beträgt.

7. Verfahren nach einem der Ansprüche 1 bis 6, dadurch gekennzeichnet, daß die Aufschlußlösung weiters einen Flotationskollektor für Kaliumchlorid enthält.